# EUROPEAN PATENT APPLICATION

(11) **EP 3 193 314 A1**
(43) Date of publication of application: **19.07.2017**
(21) Application number: 16151302.3
(22) Date of filing: 14.01.2016
(51) Int. Cl.: G07F 17/32

(54) **METHOD FOR REALIZING COMBINED ONLINE AND OFFLINE MINI-FOOTBALL GAME**

(71) Applicant: Liu, Xiaoyuan, Shanghai 200070 (CN)
(72) Inventor: Liu, Xiaoyuan, Shanghai 200070 (CN)
(74) Representative: Casalonga

(57) **Abstract**

A method for realizing a combined online and offline mini-football game, the method comprising at least the follow-ing steps: setting up a field of play (1); providing a terminal device in the field of play (1), the terminal device having the functions of receiving and recording game data in real time, analyzing game statistics, and connecting to the Internet and uploading the data; providing at least a server, the server having at least a memory module, a wireless transmission module, and a downloadable and ed-itable application program, the wireless transmission module is connected to the memory module, the wireless transmission module is connected to the terminal device via the Internet, and the application program comprises at least a registration unit.

## Description

### Field of Technology

This Invention focuses on sports games, specifically, Method For Realizing Combined Online And Offline Mini-Football Game serves as its topic.

### Background Technology

Football game, which has become the most globally influential sports at present, is considered to be the world's favourite game. Meanwhile, football game has been widely popularized in everywhere around the world, not only united in characteristics of human sports, but also integrated with great fun and fierce competition. Both physical fitness of footaball players and friendships between team players are strengthened.

However, with the rapid growth of economic development, our playgrounds are replaced with increasingly growing skyscrapers, leaving less and smaller space for footaball. Abandonment of football results from frequent lack of playgrounds. Therefore, street soccer has come in vogue in cities at home and abroad, which enables personal skills to be displayed. However, compared with currently remaining traditional football games, street soccer lacks of efficient united organization and planning, consequently, problems related to recruitment of participants, selection of playing field, rules of the game, etc. arise, eg: Since united time is required, emergencies will cause delay of time; playing fields are held on lease and require to be fixed in advance; Impossibility of uniform rules due to various types of game play cause people fail to take part in the games on a normal basis and thus give up on football. Currently, no method for realizing combined online and offline football games is available for a source of people's enjoyment.

### Summary of the Invention

This Invention is developed with a view to provide a method for realizing combined online and offline mini-football game based on backwardness of available technology, the cited method works as follows: submit registration information to the servers in advance through terminal devices or enter one's name through terminal devices on site; and playing fields can be built at ant time before the game and can be easily removed after the game, which makes it available for people to enjoy fun from football games.

This invention is realized by the following technical solutions:
A method for realizing combined online and offline mini-football game is characterized in: the cited method comprising at least the following steps:
   Setting up a field of play, a plane field is required with two goals;
   Providing a terminal device in the field of play, the cited terminal device having the functions of receiving and recording game data in real time, analyzing game statistics, and connecting to the Internet and uploading the data;
   Providing at least a server, the cited server having at least a memory module, a wireless transmission module, an identity recognition module and a downloadable and ed-itable application program or ID recognizer, the cited wireless transmission module is connected to the so-called identity recognition module and the memory module, the wireless transmission module is connected to the terminal device or ID recognizer via the Internet, and the cited application program comprises at least a registration unit, the cited application program or ID recognizer can be respectively connected to the cited identity recognition module via the cited Internet.
   Providing a terminal device in the field of play with the cited application program or several ID recognizers.

The cited terminal device is downloaded with the cited application program and has registration information in the registration unit edited, then sends the registration information to the server via Internet.

The cited field of play, of which side walls are mede from flexible materials, appears to be like a rim box of close area, of which the cited two goals are separately located at either end of the close area.

The cited terminal device has at least the functions of scoring, timekeeping and camera shooting for the cited football games, the functions of scoring and timekeeping are used for recording data results of football games, the function of camera shooting is used for filming the games, and the cited terminal device uploads the cited data results and game videos to the cited server via Internet.

The cited data results shall at minimum include times of shots, shots through legs and breach of rules for the football games.

The cited application program or ID recognizer shall include individual information of participants of the football games.

The cited ID recognizer shall include two-dimension codes of cited individual information or personal accounts that stored in the cited memory module consistent with the cited individual information.

This Invention has the following advantages: simple and various registration ways and easy to be popularized. The field of play serves as an epitome of big football games and can be seamlessly integrated into it, which relax restriction on field of play and become easier for populatization. The participants play off-line games while have accesss to on-line scoring, which realizes a late-model of football games in combination with field of play, footaball game and network interaction.

The abovementioned football game mixes play ways of wirelessness, freedom, skill, music and Kuai Le together, which may not only easily become an integral part of life for most people, be well-received by Chinese people and stimulate the potential of domestic football market; but also foster more backups superb skills and let in more newcomers for Chinese football.

### Description of Figures

Figure 1 is the Flow Chart I of this Invention;
Figure 2 is the Flow Chart II of this Invention;
Figure 3 is the site structure map of this Invention;

### Specific Implementation Modalities

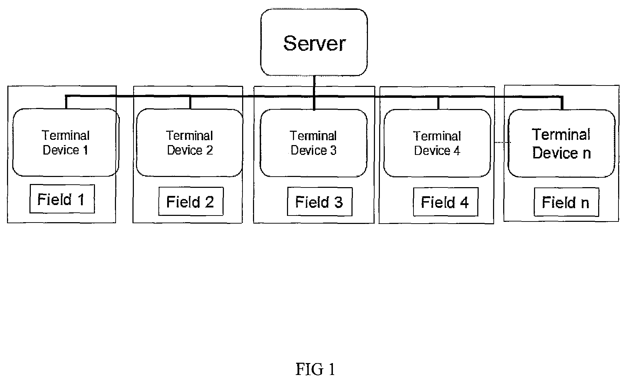

Further details of characteristics of this Invention and other related features are given in combination with Figures and examples for technicians' reference in the same business:
As shown in Figure1-3, the parts marked with 1-3 are respectively: field1, side wall2 and goal3.

Example I: On-line and off-line combination of mini-football games is reflected in: Participants register online, play off-line games and then upload game results online for game statistics and ranking. For example: The play rule for participants in play of field is one-to-one game or two-two-two game, time of game is 3 minutes, one score for one shot, one score for one shot through legs, generally, the winner is the one who gets the most scores. However, if participants of one party run the ball through legs and controls the ball until it goes beyond the field edge, they win the game. As shown in Figure 1, the method for realizing the cited mini-football game comparises the following steps:

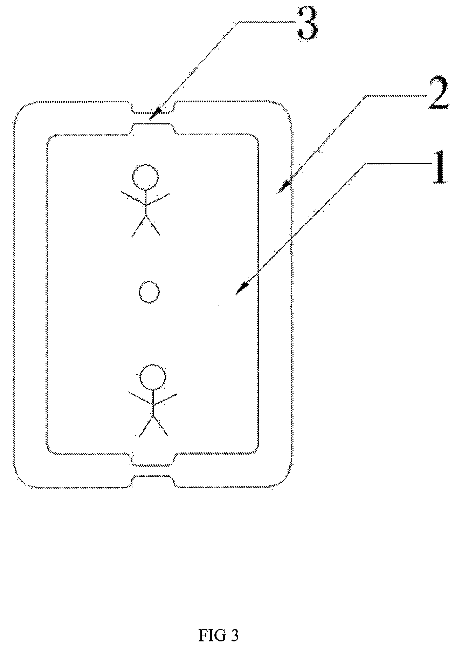

Select and build a field of play for the cited football games; As shown in Figure 3, the most basic requirement is to establish Field Ion a designated flat ground, and set up two Goals 3 within Field 1. It would be better, if side walls 2 of field can be built with guards, silk screens or other flexible materials, one one hand, participants can play games within a specified space, which can provide them with continuous training for ball control skills; on the other hand, shocks to participants arising out of matchs on field edge can be greatly weakened to avoid personal injury.

Providing a server, such server acts as a memory terminal for storage of the information related to whole mini-football game, having functions of memory, Internet transmission and a downloadable and ed-itable application program (APP) or ID recognizer. The application program having a main function of registration for football games, is downloaded to terminal device (such as mobile phone, tablet, laptop, etc.) of each participant; Internet transmission works for transmission and reception of participants'registration information that edited by the application program via Internet wireless data and storage of the informatin in the server, thus realizing on-line registration for participants. The registration information also includes personal information of each participant and can be appropriatly edited by participants by means of administration of individual accounts; Competiton registry through application program can be realized by log-ins to accounts of participants. QR codes of inindividual information are contained in ID recognizer and are held by participants when being there on competition site, individual information (including competing information, referee information, rating information) of participants can get access to server for follow-up games and scoring by scanning QR codes on aacount of terminal devices installed on competition site. Users have access to any fields of play with ID recognizers, competiton registry and scoring can be realized by QR scanners within the fields, unrestrained choices towards fields of play and related games can be made by participants.

One terminal device in exchange of wirelesss data with the server is installed within Field1 of football games, which refers to a device having function of statistics of results of the cited football games in the example, at the same time, having function of connecting to Internet and uploading data. Such device plays a role in judgement with functions of wireless transmission, scoring, timekeeping, camera shooting, etc. A referee records information of football games within Field1 with the aid of its scoring and timekeeping functions, such as two scores for shooting and one score for shooting through legs; Function of camera shooting is used for filming game videos; Wireless transmission is counted on transmitting scoring, victory or defeat resulted from scoring and game videos to the server for data updating of the server; Moreover, uploading game videos to video websites, MicroBlog and other network media can also be realized by wireless transmission for network interaction.

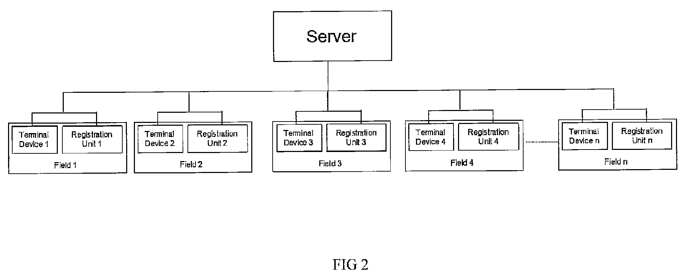

Differences between Example II and Example I are as follows: As shown in Figure2, registration units are additionally installed within each Field1, which serve as terminal devices having functions of registration, such registration function can be realized by downloading APP on the server. Registration units are designed for off-line registration and generalization of mini-football game.

The details of the cited example are as follows:
Functions of registration, judgement and camera shooting are concentrated in the downloadable APPs on the server, MicroBlogs are automatically generated once participants register, one click to keystrokes on a terminal device by a referee can realize judgement of games; Scoring statistics are definitely recored for shooting, shooting through legs, breach of rules, etc; Game videos are uploadable to video websites, user-friendly functions can utmost use manpower and material resources sparingly. In addition, APPs can be used for statistics of number of participants, times for competition, playing time, etc. Records of individual times for competition and information about win, draw or lose are made indetail.

Visual and audial experiences are available for participants except from fields of play, including sound for playing music and large screen for real- time broadcasting competition reality withing the field of play, thus composing a kind of on-line games in combination of on-line and off-line technology.

Competition data will be immediately uploaded to Internet and ranking of participants will be showed online. Webpages are exclusive for each participant which allows them to enter into social interactions with other users through the server and make an appointment to game play. Participants on the server are classified into different levels based on competition results and levels are upgraded as competition results increase. Such type of play can boost growth and levels of participants grow higher as fields of play increase and individual skills raise, thus creating a unique happiness exercise for Chinese youth.

## Claims

1. A method for realizing combined online and offline mini-football game, **characterized by** comprising at least the following steps:
Setting up a field of play, a plane field is required with two goals;
Providing a terminal device in the field of play, the cited terminal device having the functions of receiving and recording game data in real time, analyzing game statistics, and connecting to the Internet and uploading the data;
Providing at least a server, the cited server having at least a memory module, a wireless transmission module and a downloadable and ed-itable application program, the cited wireless transmission module is connected to the so-called memory module, the wireless transmission module is connected to the terminal device via the Internet, and the cited application program comprises at least a registration unit.

2. According to Patent Claim1, the cited method for realizing combined online and offline mini-football game is **characterized in**: providing a terminal device for registration in the cited field.

3. A method according Claim1 or Patent Claim2, the cited method for realizing combined online and offline mini-football game is **characterized in**: The cited terminal device is downloaded with the cited application program and has registration inforation in the registration unit edited, then sends the registration information to the server via Internet.

4. A method according claim 1, wherein the cited field of play, of which side walls are made from flexible materials, appears to be like a rim box of close area, of which the cited two goals are separately located at either end of the close area.

5. A method according to claim 1, wherein the cited terminal device has at least the functions of scoring, timekeeping and camera shooting for the cited football games, the functions of scoring and timekeeping are used for recording data results of football games, the function of camera shooting is used for filming the games, and the cited terminal device uploads the cited data results and game videos to the cited server via Internet.

6. A method according to claim 5, wherein the cited the cited data results shall at minimum include times of shots, shots through legs and breach of rules for the football games.
